# EUROPEAN PATENT SPECIFICATION

(11) **EP 1 935 772 B1**
(45) Date of publication and mention of the grant of the patent: **24.03.2010**
(21) Application number: 07024156.7
(22) Date of filing: 12.12.2007
(51) Int. Cl.: B62K 25/28

(54) **Vehicle with swing arm suspension**
Fahrzeug mit Radschwingaufhängung
Véhicule à bras oscillant suspendu

(30) Priority: 19.12.2006 JP 2006341423
(43) Date of publication of application: 25.06.2008
(73) Proprietor: Yamaha Hatsudoki Kabushiki Kaisha, Iwata-shi, Shizuoka-ken 438-8501 (JP)
(72) Inventor: Matsushima, Eiji c/o Yamaha Hatsudoki Kabushiki Kaisha, Iwata-shi Shizuoka-ken 438-8501 (JP)
(74) Representative: Grünecker, Kinkeldey, Stockmair & Schwanhäusser Anwaltssozietät

(56) References cited:
- EP-A- 1 462 352
- DE-A1- 3 816 836
- GB-A- 2 142 591

## Description

The present invention relates to a vehicle such as a motorcycle.

Conventionally, vehicles such as motorcycles include, for example, the vehicle disclosed in Patent Document 1. The vehicle described in this Patent Document 1 has a main frame extending from a head pipe and above an engine and then rearward, seat rails extending generally horizontally rearward from a mid portion of the main frame, and a swing arm coupled with a rear end of the main frame for swing movement and has a rear wheel attached thereto. An oil damper is disposed between the seat rails and the swing arm. The damper extends and contracts when the swing arm swings by vibrations and shocks transmitted from the road while running; thereby, the damper damps the swing movement of the swing arm to enhance ride of the vehicle.
Patent Document 1: JP-A-Hei 5-139358

Meanwhile, in the vehicle described in Patent Document 1, a bracket is disposed at a top end of a cylinder of the oil damper. This bracket is attached to the seat rails positioned in a top portion of the vehicle. Therefore, the seat rails need to be located in a higher position. As a result, the center of gravity of the whole vehicle is placed at a high position, and there arises a problem such that it is difficult to sufficiently improve running stability of the vehicle.

Further, there is known from DE 38 16 836 A1 a suspension system comprising a damper arranged substantially in a vertical direction. A longitudinal axis of the damper which correlates to an effect direction of the damper interacts with an imaginary elongation of the swing arm, thus lengthens the damper because of the needed leverage.

The present invention is made in view of such a problem, and one of objects thereof is to provide a vehicle that can improve running stability of the vehicle.

This objective is solved by a vehicle as defined in claim 1 comprising: an engine; a main frame including a rear side frame portion disposed rearward of the engine; a swing arm disposed for swing movement around a pivot shaft relative to the rear side frame portion; and a damper supported by the rear side frame portion and the swing arm and providing damping force to the swing arm, wherein the damper substantially extends in a vertical direction, and wherein the rear side frame portion comprises a damper supporting section which supports a lateral side of the damper, wherein the rear side frame portion includes a left frame section, and a right side frame section, wherein a reinforcing frame section extends between a front top end of the left side frame section and the right side frame section and the damper supporting section is disposed to extend rearward from the reinforcing frame section, and a longitudinal axis of the damper intersects with the swing arm between the pivot shaft and a rear end of the swing arm.

Preferably, the damper has an attaching bracket which projects sideward from an outer surface of the damper and is attached to the damper supporting section.

Further, preferably the rear side frame portion includes a left side frame section and a right side frame section, wherein, as the damper supporting section, a left side damper supporting section positioned on the left side of the damper and a right side damper supporting section positioned on a right side of the damper is provided.

Still further, preferably the damper includes, as the attaching bracket, a left side attaching bracket attachable to the left side damper supporting section and a right side attaching bracket attachable to a right side damper supporting section.

Therein, it is beneficial if the attaching bracket is supported by the damper supporting section for pivotal movement.

According to a preferred embodiment, the vehicle further comprises a fuel tank disposed above the engine, wherein the fuel tank extends toward a rear portion of a vehicle body and has an upper position section positioned above a top end of the damper.

Preferably, the fuel tank has a side position section positioned on a lateral side of the top end of the damper.

According to another preferred embodiment, the vehicle further comprises an air cleaner disposed rearward of the damper, and an intake conduit connected to the air cleaner and to the engine positioned in front of the damper, wherein the intake conduit extends on a lateral side of the damper to be connected to the engine.

According to yet another preferred embodiment, the vehicle further comprises an air cleaner disposed rearward of the damper, and an intake conduit connected to the air cleaner and to the engine positioned in front of the damper, wherein the intake conduit extends above a top end of the damper to be connected to the engine.

Preferably, the intake conduit has an upper position section positioned above a top end of the damper.

In the following, the present invention is explained in greater detail with respect to several embodiments thereof in conjunction with the accompanying drawings, wherein:
- FIG. 1: is a side elevational view of a motorcycle configured in accordance with a first embodiment of the present teaching,
- FIG. 2: is a partial, enlarged view showing an enlarged rear side frame portion, an oil damper, etc. of FIG. 1,
- FIG. 3: is a cross sectional view taken along the line III-III of FIG. 2,
- FIG. 4: is a partial, enlarged view showing a rear side frame portion, an oil damper, etc. of a motorcycle configured in accordance with a second embodiment of the present teaching, and
- FIG. 5: is a cross sectional view taken along the line V-V of FIG. 4.

### Description of Reference Numerals and Symbols:

1, 1a: motorcycle
6: seat
10: engine
11: main frame
11A: rear side frame portion
11L: left side frame section
11R: right side frame section
13: front fork
14: front wheel
16: rear wheel
17, 70: fuel tank
17A: upper position section
17L, 17R: side position section
20L: left side damper supporting section
20R: right side damper supporting section
21L: left side attaching bracket
21R: right side attaching bracket
30: swing arm
31: pivot shaft
40: oil damper (damper)
41: link member
50L, 50R: bolt
52: cover
55: bearing
60: air cleaner
61, 100: intake conduit
61L, 100L, 100R: side position section

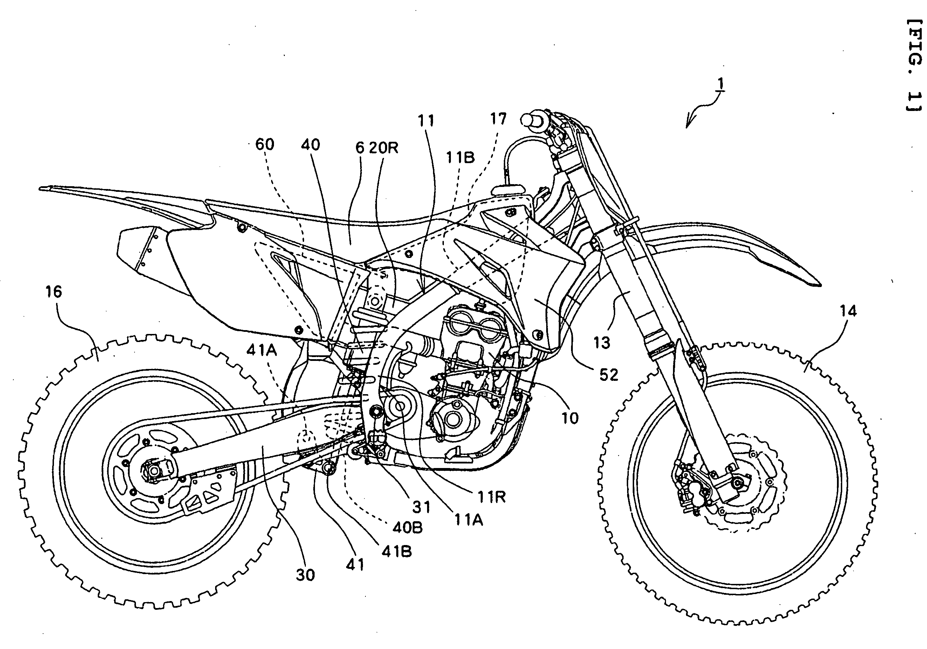

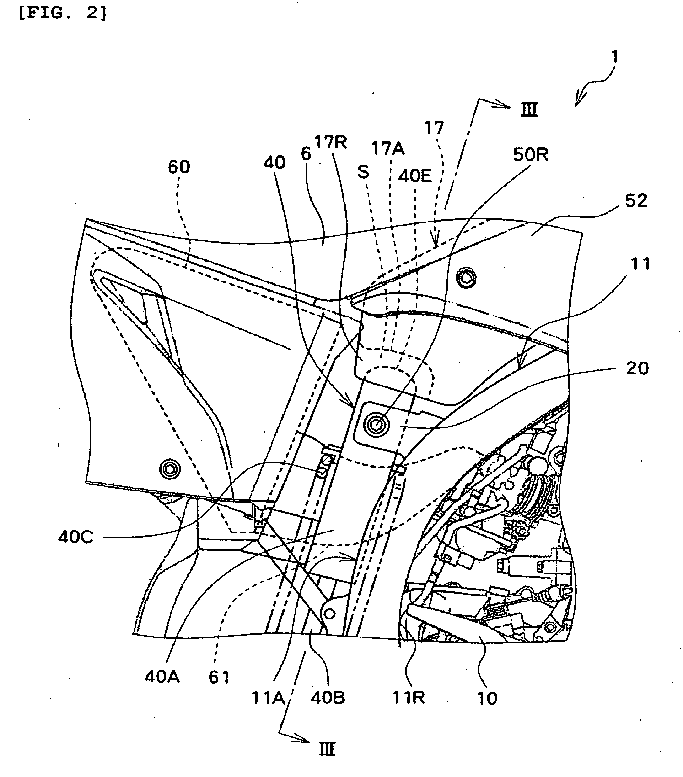

By taking, as an example, a case in which a vehicle configured in accordance with a first embodiment of the present teaching is applied to a motorcycle, and with reference to FIGs. 1-3, the embodiment will be described.

As shown in FIGs. 1-3, a motorcycle 1 according to the embodiment of the present teaching has an engine 10, left and right main frames 11, a front wheel 14, a rear wheel 16, left and right swing arms 30 (only one of them is shown), an oil damper 40 and an air cleaner 60. The front wheel 14 is attached to a right and left pair of front forks 13 (only one of them is shown) for swing movement in a vertical direction and steerably. The swing arms 30 extend toward a rear portion of a vehicle body, and the rear ends thereof support the rear wheel for rotation. The front ends of the swing arms 30 are attached to the respective main frames 11 through a pivot shaft 31 so that the swing arms 30 can swing in the vertical direction together with the rear wheel 16 relative to the main frames 11. A fuel tank 17 is mounted above the engine 10, and a seat 6 is disposed in the rear of the fuel tank 17. Further, an air cleaner 60 is disposed below a rear portion of the seat 6.

Each main frame 11 includes a rear side frame portion 11A positioned rearward of the engine 10 and a front frame portion 11B (see FIG. 1) ranging from the front end (top end) of each rear side frame portion 11A and extending obliquely upward forward from the front end above the engine 10. The rear side frame portions 11A include a left and right pair of left side frame section 11L and right side frame section 11R, and a reinforcing frame section 11C. Each of the left side frame section 11L and the right side frame section 11R extends in the vertical direction behind the engine 10 and slightly arcuately curves from the rear end (bottom end) toward the front end. The reinforcing frame section 11C extends between the front end (top end) of the left side frame section 11L and the front end (top end) of the right side frame section 11R to couple them with each other.

The rear side frame portions 11A have a left and right pair of left side damper supporting section 20L and right side damper supporting section 20R for supporting the oil damper 40. Each of the left side damper supporting section 20L and the right side damper supporting section 20R is disposed to extend rearward from a left end or a right end of the reinforcing frame section 11C that extends in a right and left direction (vehicle width direction). Each of the left side damper supporting section 20L and the right side damper supporting section 20R is made of a plate material which generally has a rectangular shape and a bolt hole 22L, 22R is formed at an end thereof. Additionally, a left side attaching bracket 21L and a right side attaching bracket 21R of the oil damper which will be described later are attached to the bolt holes 22L, 22R by bolts 50L, 50R.

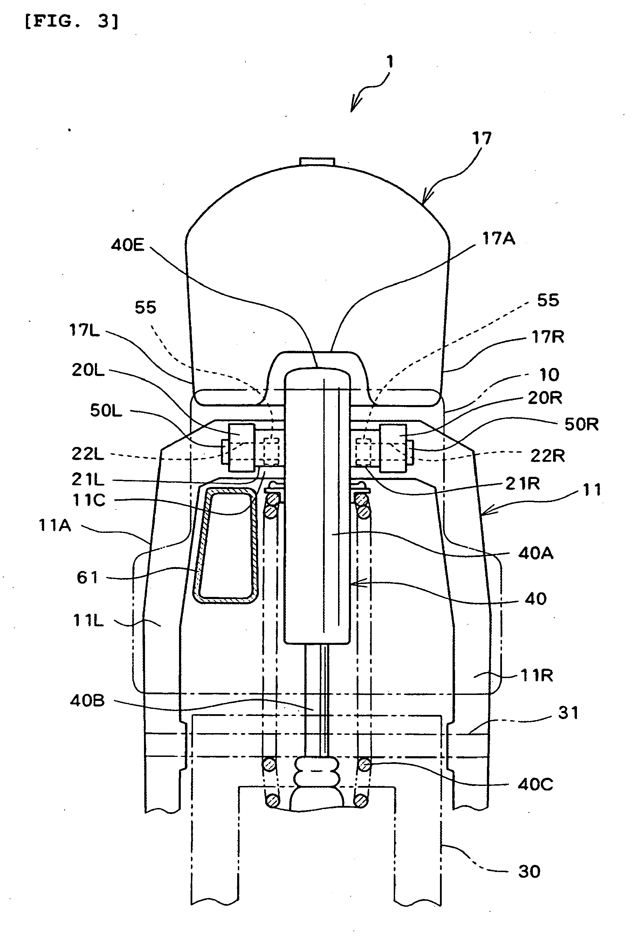

In this embodiment, as shown in FIG. 3, the oil damper 40 extends in the vertical direction between the left side frame section 11L and the right side frame section 11+R. The oil damper 40 includes a cylinder 40A, a rod 40B, a coil spring 40C and a piston which is not shown. The cylinder 40A is supported by the rear side frame portions 11A and contains oil inside. The piston, which is not shown, is placed inside the cylinder 40A and is disposed for slide movement inside the cylinder 40A. The base end of the rod 40B is fixed to the piston, while the tip end thereof extends outside the cylinder 40A to be supported by the swing arms 30. The coil spring 40C is disposed between the cylinder 40A and the rod 40B for extending and contracting movement.

As shown in FIG. 3, the oil damper 40 has the left and right pair of left side attaching bracket 21L and right side attaching bracket 21R. The left side attaching bracket 21L and the right side attaching bracket 21R are positioned midway in an axial direction of the cylinder 40A. In this embodiment, each of the left side attaching bracket 21L and the right side attaching bracket 21R has a columnar shape and projects leftward or rightward from an outer surface of the cylinder 40A. Each of the left side attaching bracket 21L and the right side attaching bracket 21R is coupled with the left side damper supporting section 20L or the right side damper supporting section 20R by the bolt 50L or the bolt 50R for pivotal movement. In this embodiment, bearings 55, 55 are put on the respective bolts 50L, 50R; thereby, the left side attaching bracket 21L and the right side attaching bracket 21R are pivotable relative to the left side damper supporting section 20L and the right side damper supporting section 20R, respectively.

Additionally, as shown in FIG. 1, the tip end of the rod 40B of the oil damper 40 is attached to the swing arms 30 through a link member 41. Also, the tip end of the rod 40B is pivotable relative to the link member 41. The link member 41 is made of a plate material which curves generally as the letter L. One end 41A of the link member 41 in a longitudinal direction thereof is coupled with the swing arms 30 for pivotal movement. Also, another end 41B of the link member 41 is coupled with the rod 40B of the oil damper 40 through a bearing (not shown) for pivotal movement.

When the rod 40B enters the inside of the cylinder 40A because the swing arms 30 swing upward while running, the oil contained within the inside of the cylinder 40A passes through orifices defined in the piston; thereby, the oil damper provides the damping force (attenuation force) to the swing arms 30.

The fuel tank 17 is shaped as a casing and is disposed above the engine 10. A cover 52 circumferentially surrounds an outer surface of the fuel tank 17. In this embodiment, the fuel tank 17 is disposed to extend toward the rear portion of the vehicle body and has an upper position section 17A positioned above a top end 40E of the oil damper 40. The upper position section 17A is positioned in a space S defined between the top end 40E of the oil damper 40 and the cover 52 in a side view. Also, the fuel tank 17 has side position sections 17L, 17R positioned on the left and right sides of the oil damper 40 and above the reinforcing frame section 11C. Thereby, the capacity of the fuel tank 17 is ensured while interference between the fuel tank 17 and the top end 40E of the oil damper 40 is avoided.

As shown in FIG. 1, the air cleaner 60 is disposed in the rear of the oil damper 40. An intake conduit 61 for supplying air cleaned by the air cleaner 60 to the engine 10 is connected to the cleaner 60. As shown in FIG. 3, the intake conduit 61 extends on the left side of the oil damper 40 to be connected to the engine positioned in front of the oil damper 40. The intake conduit 61 has a side position section 61L positioned on a lateral side of the oil damper 40. Also, the side position section 61L is positioned on the right side (location close to a center portion in the width direction) of the left side frame section 11L.

In the motorcycle 1 described above, the left side attaching bracket 21L and the right side attaching bracket 21R both projecting leftward and rightward are disposed on the outer surface of the cylinder 40A of the oil damper 40. Those brackets 21L, 21R are supported by the left side damper supporting section 20L and the right side damper supporting section 20R of the respective rear side frame portions 11A. Therefore, the main frames 11 and the seat rails (not shown) supporting the seat 6 are not required to be positioned above the oil damper to support the oil damper 40. The center of gravity of the vehicle body can be lowered and the running stability of the vehicle can be enhanced.

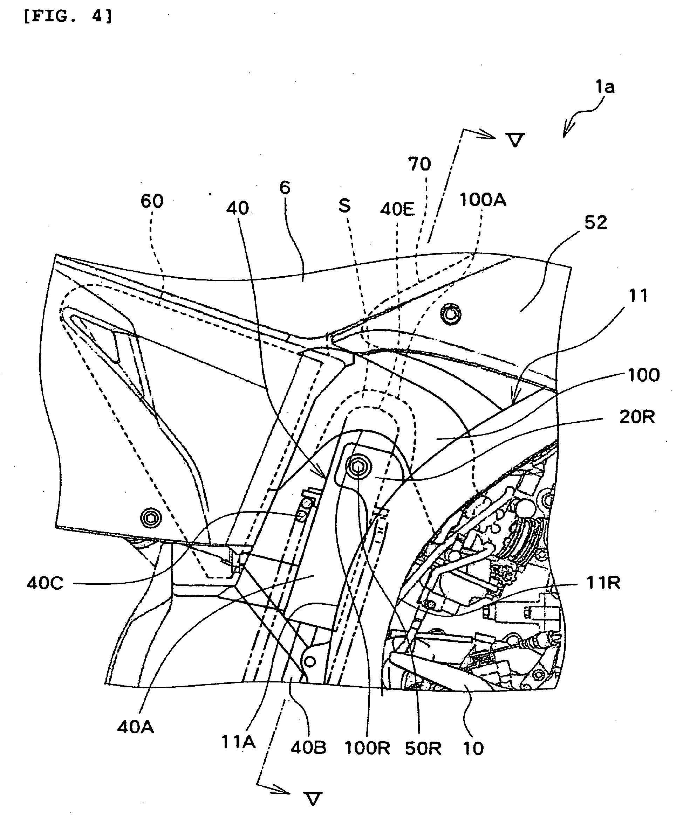

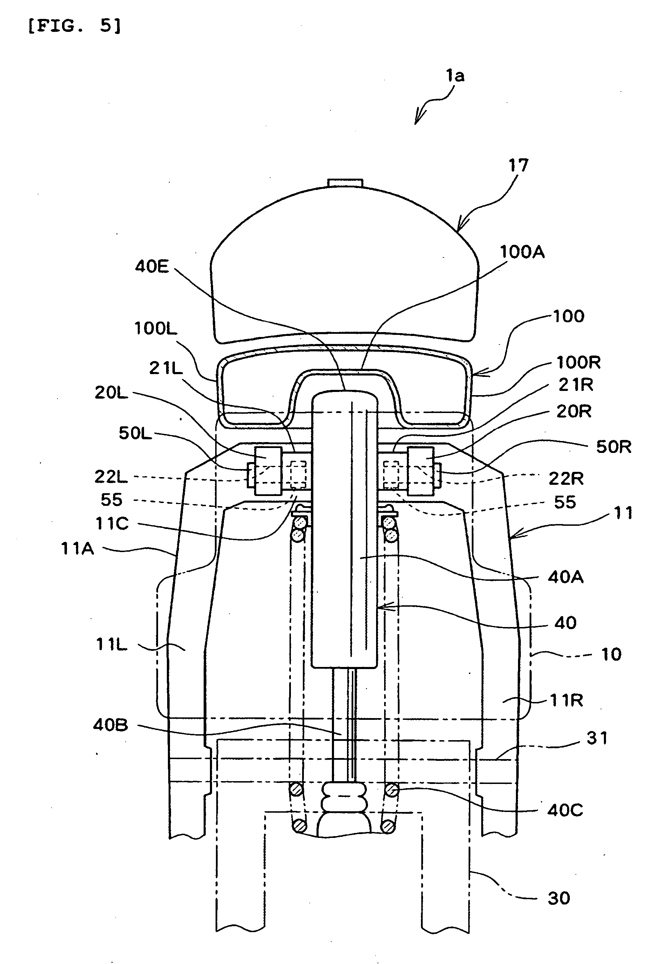

Additionally, the present teaching is not limited to the motorcycle 1 described above and can have various modifications. For example, although the fuel tank 17 is disposed above the oil damper 40 in the motorcycle 1, the intake conduit can be disposed above the oil damper 40. A motorcycle 1a shown in FIGs. 4 and 5 is the motorcycle configured in accordance with the modified embodiment. Additionally, in those figures, the same portions as the portions described above are assigned with the same reference numerals and symbols, and further descriptions are omitted.

In the motorcycle 1a, an intake conduit 100 extends above the top end 40E of the oil damper 40 to be connected to the engine positioned in front of the oil damper 40. The intake conduit 100 has an upper position section 100A positioned above the top end 40E of the oil damper 40. The upper position section 100A is positioned in a space S defined between the top end 40E of the oil damper 40 and the cover 52 in a side view. Also, as shown in FIG. 5, the intake conduit 100 has side position sections 100L, 100R positioned on the left and right sides of the oil damper 40 and above the reinforcing frame section 11C. Thereby, the intake conduit 100 can be thicker so that a flow amount of air passing through the intake conduit 100 can increase, while interference between the intake conduit 100 and the oil damper 40 is avoided. Also, by placing other devices of the motorcycle 1 a in spaces defined on left and right sides of a mid portion of the oil damper 40, the spaces can be effectively used.

Additionally, in the above descriptions, the motorcycle 1 is described as an example of a vehicle. The present teaching is not limited to the motorcycle and can be applied to vehicles such as a three-wheeled vehicle and a beach buggy.

## Claims

1. Vehicle (1) comprising:
an engine (10);
a main frame (11) including a rear side frame portion (11A) disposed rearward of the engine (10);
a swing arm (30) disposed for swing movement around a pivot shaft (31) relative to the rear side frame portion (11A); and
a damper (40) supported by the rear side frame portion (11A) and the swing arm (30) and providing damping force to the swing arm (30), wherein
the damper (40) substantially extends in a vertical direction, and wherein
the rear side frame portion (11A) comprises a damper supporting section (20L,20R) which supports a lateral side of the damper (40),
**characterized in that**
the rear side frame portion (11A) includes a left side frame section (11L) and a right side frame section (11 R), wherein a reinforcing frame section (11c) extends between a front top end of the left side frame section (11 L) and the right side frame section (11R) and the damper supporting section (20L,20R) is disposed to extend rearward from the reinforcing frame section (11c), and a longitudinal axis of the damper (40) intersects with the swing arm (30) between the pivot shaft (31) and a rear end of the swing arm (30).

2. Vehicle according to claim 1, wherein the damper (40) has an attaching bracket (21 L,21 R) which projects sideward from an outer surface of the damper (40) and is attached to the damper supporting section (20L,20R).

3. Vehicle according to claim 1 or 2, wherein the rear side frame portion (11A) includes a left side frame section (11 L) and a right side frame section (11 R), wherein, as the damper supporting section, a left side damper supporting section (20L) positioned on the left side of the damper (40) and a right side damper supporting section (20R) positioned on a right side of the damper (40) is provided.

4. Vehicle according to one of the claims 1 to 3, wherein the damper (40) includes, as the attaching bracket, a left side attaching bracket (21 L) attachable to the left side damper supporting section (20L) and a right side attaching bracket (21 R) attachable to a right side damper supporting section (20R).

5. Vehicle according to one of the claims 2 to 4, wherein the attaching bracket (21 L,21 R) is supported by the damper supporting section (20L,20R) for pivotal movement.

6. Vehicle according to one of the claims 1 to 5, further comprising a fuel tank (17) disposed above the engine (10), wherein the fuel tank (17) extends toward a rear portion of a vehicle body and has an upper position section positioned above a top end of the damper (40).

7. Vehicle according to claim 6, wherein the fuel tank (17) has a side position section positioned on a lateral side of the top end of the damper (40).

8. Vehicle according to claim 6 or 7, further comprising an air cleaner (60) disposed rearward of the damper (40), and an intake conduit (61) connected to the air cleaner (60) and to the engine (10) positioned in front of the damper (40), wherein the intake conduit (61) extends on a lateral side of the damper (40) to be connected to the engine (10).

9. Vehicle according to one of the claims 1 to 5, further comprising an air cleaner (60) disposed rearward of the damper (40), and an intake conduit (100) connected to the air cleaner (60) and to the engine (10) positioned in front of the damper (40), wherein the intake conduit (100) extends above a top end of the damper (40) to be connected to the engine (10).

10. Vehicle according to claim 9, wherein the intake conduit (100) has an upper position section positioned above a top end of the damper (40).

## Patentansprüche

1. Fahrzeug (1), aufweisend:
eine Brennkraftmaschine (10);
einen Hauptrahmen (11), der einen Rückseiten- Rahmenabschnitt (11A) aufweist, angeordnet hinter der Brennkraftmaschine (10);
einen Schwingarm (30), angeordnet für eine Schwingbewegung um eine Schwenkwelle (31) zu dem Rückseiten- Rahmenabschnitt (11A); und
einen Dämpfer (40), getragen durch den Rückseiten- Rahmenabschnitt (11A) und den Schwingarm (30) und eine Dämpfungskraft auf den Schwingarm (30) ausübend, wobei
sich der Dämpfer (40) im Wesentlichen in einer vertikalen Richtung erstreckt und wobei
der Rückseiten- Rahmenabschnitt (11A) einen Dämpfertragabschnitt (20L, 20R) aufweist, der eine seitliche Seite des Dämpfers (40) trägt,
**dadurch gekennzeichnet, dass**
der Rückseiten- Rahmenabschnitt (11A) einen linksseitigen Rahmenabschnitt (11 L) und einen rechtsseitigen Rahmenabschnitt (11 R) enthält, wobei sich ein Verstärkungsrahmenabschnitt (11 c) zwischen einem vorderen oberen Ende des linksseitigen Rahmenabschnittes (11L) und des rechtsseitigen Rahmenabschnittes (11 R) erstreckt und der Dämpfertragabschnitt (20L, 20R) angeordnet ist, sich nach hinten von dem Verstärkungsrahmenabschnitt (11 c) zu erstrecken und eine Längsachse des Dämpfers (40) sich mit dem Schwingarm (30) zwischen der Schwenkwelle (31) und einem hinteren Ende des Schwingarmes (30) schneidet.

2. Fahrzeug nach Anspruch 1, wobei der Dämpfer (40) einen Verbindungshalter (21 L, 21 R) hat, der seitlich von einer Außenoberfläche des Dämpfers (40) vorspringt und mit dem Dämpfertragabschnitt (20L, 20R) verbunden ist.

3. Fahrzeug nach Anspruch 1 oder 2, wobei der Rückseiten- Rahmenabschnitt (11A) einen linksseitigen Rahmenabschnitt (11 L) und einen rechtsseitigen Rahmenabschnitt (11 R) enthält, wobei, als der Dämpfertragabschnitt, ein linksseitiger Dämpfertragabschnitt (20L), positioniert auf der linken Seite des Dämpfers (40), und ein rechtsseitiger Dämpfertragabschnitt (20R), positioniert auf einer rechten Seite des Dämpfers (40), vorgesehen ist.

4. Fahrzeug nach einem der Ansprüche 1 bis 3, wobei der Dämpfer (40), als den Verbindungshalter, einen linksseitigen Verbindungshalter (21 L), verbunden mit dem linksseitigen Dämpfertragabschnitt (20L), und einen rechtsseitigen Verbindungshalter (21 R), verbunden mit dem rechtsseitigen Dämpfertragabschnitt (20R), enthält.

5. Fahrzeug nach einem der Ansprüche 2 bis 4, wobei der Verbindungshalter (21 L, 21 R) durch den Dämpfertragabschnitt (20L, 20R) für eine Schwenkbewegung gelagert ist.

6. Fahrzeug nach einem der Ansprüche 1 bis 5, außerdem aufweisend einen Kraftstofftank (17), angeordnet oberhalb der Brennkraftmaschine (10), wobei sich der Kraftstofftank (17) in Richtung zu einem hinteren Abschnitt einer Fahrzeugkarosserie erstreckt und einen oberen Positionsabschnitt oberhalb des obersten Endes des Dämpfers (40) hat.

7. Fahrzeug nach Anspruch 6, wobei der Kraftstofftank (17) einen Seitenpositionsabschnitt, positioniert auf einer seitlichen Seite des oberen Endes des Dämpfers (40), hat.

8. Fahrzeug nach Anspruch 6 oder 7, außerdem aufweisend einen Luftfilter (60), angeordnet hinter dem Dämpfer (40), und einen Einlasskanal (61), verbunden mit dem Luftfilter (60) und zu der Brennkraftmaschine (10) vor dem Dämpfer (40) positioniert, wobei sich der Einlasskanal (61) auf einer seitlichen Seite des Dämpfers (40), verbunden mit der Brennkraftmaschine (10), erstreckt.

9. Fahrzeug nach einem der Ansprüche 1 bis 5, außerdem aufweisend einen Luftfilter (60), angeordnet hinter dem Dämpfer (40), und einen Einlasskanal (100), verbunden mit dem Luftfilter (60) und zu der Brennkraftmaschine (10) vor dem Dämpfer (40) positioniert, wobei sich der Einlasskanal (100) oberhalb eines obersten Endes des Dämpfers (40) erstreckt, um mit der Brennkraftmaschine (10) verbunden zu sein.

10. Fahrzeug nach Anspruch 9, wobei der Einlasskanal (100) einen oberen Positionsabschnitt hat, positioniert oberhalb eines oberen Endes des Dämpfers (40).

## Revendications

1. Véhicule (1) comprenant :
un moteur (10) ;
un châssis principal (11) comprenant une portion de châssis arrière (11A) disposée à l'arrière du moteur (10) ;
un bras oscillant (30) disposé pour un mouvement oscillatoire autour d'un arbre de pivot (31) par rapport à la portion de châssis arrière (11A) ; et
un amortisseur (40) supporté par la portion de châssis arrière (11A) et le bras oscillant (30) et conférant une force d'amortissement au bras oscillant (30), dans lequel
l'amortisseur (40) s'étend sensiblement dans une direction verticale, et dans lequel
la portion de châssis arrière (11A) comprend une section de support d'amortisseur (20L, 20R) qui supporte un côté latéral de l'amortisseur (40),
**caractérisé en ce que**
la portion de châssis arrière (11A) comprend une section de châssis gauche (11L) et une section de châssis droite (11R), dans lequel une section de châssis de renfort (11c) s'étend entre une extrémité supérieure avant de la section de châssis gauche (11L) et la section de châssis droite (11R) et la section de support d'amortisseur (20L, 20R) est disposée pour s'étendre vers l'arrière de la section de châssis de renfort (11c), et un axe longitudinal de l'amortisseur (40) coupe le bras oscillant (30) entre l'arbre de pivot (31) et une extrémité arrière du bras oscillant (30).

2. Véhicule selon la revendication 1, dans lequel l'amortisseur (40) comporte un support de fixation (21L, 21R) faisant saillie vers l'arrière depuis une surface externe de l'amortisseur (40) et fixé à la section de support d'amortisseur (20L, 20R).

3. Véhicule selon la revendication 1 ou 2, dans lequel la portion de châssis arrière (11A) comprend une section de châssis gauche (11L) et une section de châssis droite (11R), dans lequel, en tant que section de support d'amortisseur, une section de support d'amortisseur gauche (20L) positionnée sur le côté gauche de l'amortisseur (40) et une section de support d'amortisseur droite (20R) positionnée sur le côté droit de l'amortisseur (40), sont prévues.

4. Véhicule selon l'une des revendications 1 à 3, dans lequel l'amortisseur (40) comprend, en tant que support de fixation, un support de fixation gauche (21L) pouvant être fixé à la section de support d'amortisseur gauche (20L) et un support de fixation droit (21R) pouvant être fixé à une section de support d'amortisseur droite (20R).

5. Véhicule selon l'une des revendications 2 à 4, dans lequel le support de fixation (21L, 21R) est supporté par la section de support d'amortisseur (20L, 20R) pour un mouvement pivotant.

6. Véhicule selon l'une des revendications 1 à 5, comprenant en outre un réservoir de carburant (17) disposé au-dessus du moteur (10), dans lequel le réservoir de carburant (17) s'étend vers une portion arrière d'une carrosserie de véhicule et présente une section de position supérieure positionnée au-dessus d'une extrémité supérieure de l'amortisseur (40).

7. Véhicule selon la revendication 6, dans lequel le réservoir de carburant (17) comporte une section de position latérale positionnée sur un côté latéral de l'extrémité supérieure de l'amortisseur (40).

8. Véhicule selon la revendication 6 ou 7, comprenant en outre un filtre à air (60) disposé à l'arrière de l'amortisseur (40), et un conduit d'admission (61) raccordé au filtre à air (60) et au moteur (10) positionné à l'avant de l'amortisseur (40), dans lequel le conduit d'admission (61) s'étend sur un côté latéral de l'amortisseur (40) pour être raccordé au moteur (10).

9. Véhicule selon l'une des revendications 1 à 5, comprenant en outre un filtre à air (60) disposé à l'arrière de l'amortisseur (40), et un conduit d'admission (100) raccordé au filtre à air (60) et au moteur (10) positionné en face de l'amortisseur (40), dans lequel le conduit d'admission (100) s'étend au-dessus d'une extrémité supérieure de l'amortisseur (40) pour être raccordé au moteur (10).

10. Véhicule selon la revendication 9, dans lequel le conduit d'admission (100) comporte une section de position supérieure positionnée au-dessus d'une extrémité supérieure de l'amortisseur (40).
